# EUROPEAN PATENT APPLICATION

(11) **EP 4 459 778 A1**
(43) Date of publication of application: **06.11.2024**
(21) Application number: 23857659.9
(22) Date of filing: 18.08.2023
(51) Int. Cl.: H01M 50/451, H01M 50/491, H01M 50/443, H01M 50/42, H01M 50/426, H01M 50/46, H01M 10/058, H01M 10/052

(54) **SEPARATOR FOR ELECTROCHEMICAL DEVICE AND ELECTROCHEMICAL DEVICE COMPRISING SAME**

(30) Priority: 26.08.2022 KR 20220107939
(71) Applicant: LG Energy Solution, Ltd., Seoul 07335 (KR)
(72) Inventor: LEE, Seung Hyun, Daejeon 34122 (KR); KIM, Min Ji, Daejeon 34122 (KR); KIM, Hye Won, Daejeon 34122 (KR); SUNG, Dong Wook, Daejeon 34122 (KR); KA, Kyung Ryun, Daejeon 34122 (KR)
(74) Representative: Hoffmann Eitle
(86) International application number: PCT/KR2023/012272
(87) International publication number: WO 2024/043626

(57) **Abstract**

Proposed is an electrochemical device separator and an electrochemical device including the same. The present disclosure includes a porous polymer substrate and an organic/inorganic composite porous coating layer formed on at least one surface of the polymer substrate, in which the porous coating layer includes particulate binder resins and inorganic particles, and [content of binder particles in an upper portion of a porous coating layer before impregnation with electrolyte/content of binder particles in a central portion of a porous coating layer before impregnation with electrolyte] - [content of binder particles in an upper portion of a porous coating layer after impregnation with electrolyte/content of binder particles in a central portion of a porous coating layer after impregnation with electrolyte] is 0.32 or less.

## Description

### TECHNICAL FIELD

The present application claims priority to Korean Patent Application No. 10-2022-0107939, filed August 26, 2022, the entire contents of which is incorporated herein for all purposes by this reference.

The present disclosure relates to an electrochemical device separator and an electrochemical device including the same. More particularly, the present disclosure relates to an electrochemical device separator capable of maintaining an adhesive strength to an electrode even when the separator is impregnated with an electrolyte and an electrochemical device including the same.

### BACKGROUND ART

An electrochemical device separator including a polymer substrate having a porous structure interposed between a cathode and an anode, and separates the cathode and the anode from each other to prevent an electrical short circuit between two electrodes and to allow an electrolyte and ions to pass therethrough. The separator itself does not participate in the electrochemical reaction, but the physical properties of the separator, such as wettability to the electrolyte, the degree of porosity, and thermal shrinkage, affect the performance and safety of the electrochemical device.

Accordingly, to reinforce the physical properties of a separator, various methods have been attempted to change the physical properties of a coating layer by adding a coating layer to a porous polymer substrate and adding various materials to the coating layer. For example, an inorganic material may be added to the coating layer to improve the mechanical strength of the separator, or inorganic material or hydrate may be added to the coating layer to improve the flame retardancy and heat resistance of a polymer substrate.

The separator may have adhered to the electrode through a lamination process, and in order to secure adhesive strength between the electrode and the separator, a binder resin may be added to the coating layer composition of the separator.

On the other hand, when the polymer component included in the organic/inorganic composite porous coating layer coated on the porous polymer substrate is swollen or dissolved by the wetted electrolyte since the adhesive strength of the porous coating layer to the polymer substrate is reduced, the function of suppressing heat shrinkage of the separator may be degraded. In addition, since the adhesive strength of the separator to the electrode is weakened, problems may occur in terms of battery cell quality, such as folding the separator and poor appearance of the battery cell.

### SUMMARY OF THE INVENTION

### TECHNICAL PROBLEM

An objective of the present disclosure is to provide an electrochemical device separator including an organic/inorganic composite porous coating layer capable of maintaining adhesive strength between an electrode and a separator even in a state in which an electrolyte is injected.

In addition, the technical problem to be achieved by the present disclosure is to provide an electrochemical device including the above-described separator.

The problem to be solved by the present disclosure is not limited to the problems mentioned above, and other problems not mentioned will be clearly understood by those skilled in the art from the following description.

### TECHNICAL SOLUTION

According to embodiments of the present disclosure for achieving the above objective, an electrochemical device separator includes a porous polymer substrate and an organic/inorganic composite porous coating layer formed on at least one surface of the polymer substrate, in which the porous coating layer includes particulate binder resins and inorganic particles, and the value of [content of binder particles in the upper portion of the porous coating layer before impregnation with electrolyte/content of binder particles in the central portion of the porous coating layer before impregnation with electrolyte] - [content of binder particles in the upper portion of the porous coating layer after impregnation with electrolyte/content of binder particles in the central portion of the porous coating layer after impregnation with electrolyte] is 0.32 or less.

The particulate binder resin may be a mixture of acrylic-based polymer binder particles and vinylidene fluoride-based polymer binder particles.

In this case, the weight ratio of the acrylic-based polymer binder particles to the vinylidene fluoride-based polymer binder particles may be 7:3 to 3:7.

In addition, the acrylic-based polymer binder particles may be first copolymer binder particles, including styrene and acrylate in a weight ratio of 5:5 to 7:3.

In this case, the first copolymer binder particles may have an average particle diameter in a range of 350 to 700 nm.

The vinylidene fluoride-based polymer binder particles may be second copolymer binder particles in which vinylidene fluoride-based polymer particles containing 10% by weight or less of hexafluoropropylene (HFP) and acrylate are crosslinked in a weight ratio of 5:5 to 9:1.

In this case, the average particle diameter of the second copolymer binder particles may be in a range of 150 to 250 nm.

In addition, the particulate binder resins may further include third copolymer polymer particles containing methyl (meth)acrylate and 2-ethylhexyl (meth)acrylate, in a weight ratio of 2:8 to 5:5.

At this time, based on the total content of the particulate binder resins, the acrylic-based polymer binder particles may be 4 to 95% by weight, the vinylidene fluoride-based polymer binder particles may be 4 to 95% by weight, and the third copolymer polymer particles may be 1 to 10% by weight.

Meanwhile, according to another embodiment of the present disclosure, provided is an electrochemical device including a cathode, an anode, and a separator interposed between the cathode and the anode, in which the separator is the aforementioned an electrochemical device separator.

### ADVANTAGEOUS EFFECTS

According to an embodiment of the present disclosure, by adjusting the difference between the ratio of the content of the binder particles in the upper portion and the central portion of the porous coating layer before the electrolyte impregnation and the ratio of the content of the binder particles in the upper portion and the central portion of the porous coating layer after the electrolyte impregnation to be small, the adhesive strength between the separator and the electrode may be maintained even when the separator is impregnated with an electrolyte.

In addition, even when the separator is impregnated with electrolyte, the particulate polymer binder with less swelling is maintained in a higher content at the upper portion than in the central portion of the porous coating layer so that the adhesive strength between the separator and the electrode may be maintained even when the separator is impregnated with an electrolyte.

Therefore, it is possible to ultimately prevent the degradation of the performance of the electrochemical device.

### BRIEF DESCRIPTION OF THE DRAWINGS

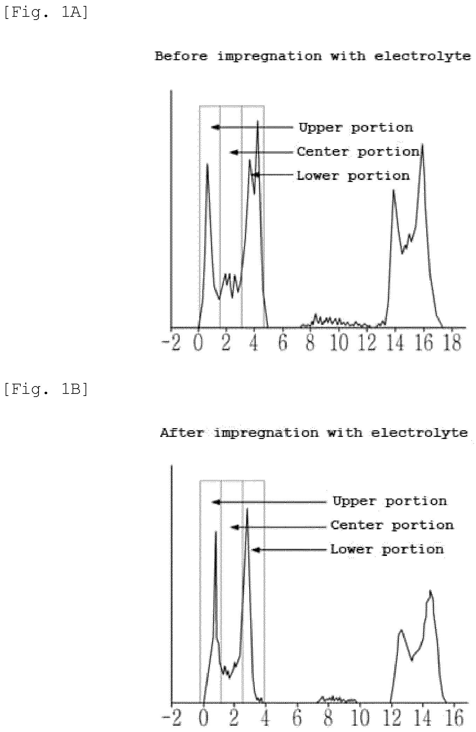

FIG. 1(A) is a view showing the distribution of the binder before impregnation with the electrolyte according to the thickness of the porous coating layer of the separator according to an Example of the present disclosure and FIG. 1(B) is a view showing the distribution of the binder after impregnation with the electrolyte according to the thickness of the porous coating layer of the separator according to an Example of the present disclosure; and

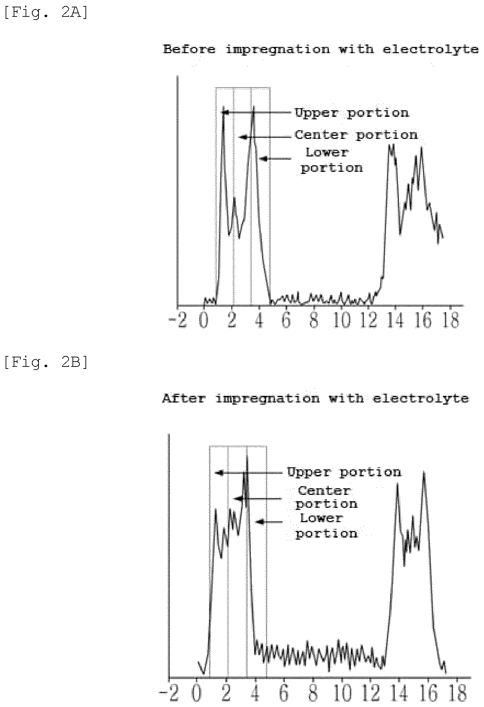

FIG. 2(A) is a view showing the distribution of the binder before electrolyte impregnation according to the thickness of the porous coating layer of the separator according to a Comparative Example of the present disclosure and FIG. 2(B) is a view showing the distribution of the binder after electrolyte impregnation according to the thickness of the porous coating layer of the separator according to a Comparative Example of the present disclosure.

### DESCRIPTION OF THE PREFERRED EMBODIMENTS

Hereinafter, the present disclosure will be described in detail.

Embodiments of the present disclosure to be described below are provided to more clearly describe the present disclosure to those skilled in the art, the scope of the present disclosure is not limited to the following embodiments, and the following embodiments may be modified in various different forms.

The terms used in the present specification are used to describe specific embodiments and are not intended to limit the present disclosure. The terms of the singular form used in the present specification may include plural forms unless they clearly point out other cases in the context. Furthermore, the terms "comprise" and/or "comprising" as used herein specify the presence or addition of one or more other shapes, steps, numbers, operations, members, elements, and/or groups mentioned and do not exclude the presence or addition of one or more other shapes, steps, numbers, operations, members, elements, and/or these groups. In addition, the term "connection" as used herein is a concept that includes not only that certain members are directly connected but also that other members are further interposed between the members to be indirectly connected.

In addition, in the present specification, when a member is said to be located "on" another member, this includes not only a case in which a member is in contact with another member but also a case in which another member is present between the two members. The term "and/or" used herein includes any one of the listed items and all combinations of one or more thereof. In addition, as used herein, terms such as "about", "substantially" and the like are used to mean the range or close to the numerical value or degree in consideration of inherent manufacturing and material tolerances. In addition, exact or absolute figures provided to help the understanding of the present application are used to prevent an infringer from using the mentioned disclosure unfairly.

The electrochemical device separator, according to an aspect of the present disclosure, includes a porous polymer substrate and an organic/inorganic composite porous coating layer formed on at least one surface of the polymer substrate, in which the porous coating layer includes particulate binder resins and inorganic particles, and the value of [content of binder particles in the upper portion of the porous coating layer before impregnation with electrolyte/content of binder particles in the central portion of the porous coating layer before impregnation with electrolyte] - [content of binder particles in the upper portion of the porous coating layer after impregnation with electrolyte/content of binder particles in the central portion of the porous coating layer after impregnation with electrolyte] (hereinafter referred to as Formula A) is 0.32 or less.

Here, the upper portion of the porous coating layer means a portion corresponding to about 1/3 of the total thickness of the porous coating layer from the surface of the porous coating layer, and the central portion of the porous coating layer means a part corresponding to about 1/3 of the total thickness of the porous coating layer from the lower surface of the upper portion of the porous coating layer, and the lower part of the porous coating layer means a part excluding the upper portion and the central portion.

In one embodiment of the present disclosure, the thickness of the porous polymer substrate may be measured by applying a contact thickness measuring device. The contact-type thickness gauge may be used, for example, Mitutoyo's VL-50S-B.

In order to have excellent adhesion between the electrode and the porous coating layer, it is advantageous that the content of the binder resin present in the upper portion of the porous coating layer is relatively higher than in the central portion of the porous coating layer. This condition satisfies the following Formula.
[content of binder particles in the upper portion of the porous coating layer/content of binder particles in the central portion of the porous coating layer] (hereinafter referred to as Formula B) > 1.0

In addition, in order not to cause problems such as degradation of battery performance, the adhesion between the electrode and the porous coating layer should be maintained even in the state in which the electrolyte is injected. That is, even in a state in which the electrolyte is injected, the content of the binder resin present in the upper portion rather than the central portion of the porous coating layer should be large, and in this case, Formula B should be satisfied.

On the other hand, in general, after electrolyte injection (that is, the state of being wet with electrolyte), the binder component in the porous coating layer is swelled or dissolved by the injected electrolyte, and thus the adhesive strength of the porous coating layer to the electrode is decreased than before the electrolyte is injected (the state of being dry). This seems to be because the content of the binder resin on the upper portion of the porous coating layer is relatively reduced as the binder resin on the upper portion of the porous coating layer is migrated toward the central portion of the porous coating layer by wetting with the electrolyte.

However, in order to minimize degradation of the adhesive strength of the porous coating layer to the electrode, even in the wet state, it is preferable that the content ratio of the upper binder particles to the central binder particles of the porous coating layer in the dry state is maintained at a similar level, and as described above, it is preferable that Formula A is 0.32 or less. When the value of Formula A exceeds 0.32, the adhesive strength of the porous coating layer to the electrode in the wet state may be completely lost.

On the other hand, the polymer substrate, according to the present disclosure, includes pores through which lithium ions pass while electrically insulating the anode and the cathode to prevent short circuits and may use a porous membrane having high resistance to an electrolyte that is an organic solvent and fine pores. As the polymer substrate, it can be used without any particular limitation as long as it can be used as a separator material for a secondary battery in general, for example, the polymer substrate may include polyolefin-based including polyethylene, polypropylene and polybutene, polyvinyl chloride, polyethylene terephthalate, polycycloolefin, and a resin such as polyethersulfone, polyamide, polyimide, polyimideamide, polyaramid, polycycloolefin, nylon, polytetrafluoroethylene and a mixture thereof, or a copolymer thereof. Among them, a polyolefin-based resin has excellent coating properties of a slurry for a coating layer, and can increase a capacity per volume by increasing a ratio of an electrode active material layer in a battery by reducing the thickness of the separator for a secondary battery.

The thickness of the polymer substrate may be in a range of 1 to 100 µm, specifically 1 to 30 µm, and the pore diameter of the polymer substrate may generally be in a range of 0.01 to 10 µm.

In one embodiment of the present disclosure, the porosity of the polymer substrate may be 30 vol% or more. Specifically, the porosity of the polymer substrate may be 30 vol% or more and 70 vol% or less, 32 vol% or more and 68 vol% or less, 34 vol% or more and 66 vol% or less, 36 vol% or more and 64 vol% or less, 38 vol% or more and 62 vol% or less, 40 vol% or more and 60 vol% or less, 42 vol% or more and 58 vol% or less, 44 vol% or more and 56 vol% or less, 46 vol% or more and 54 vol% or less, or 48 vol% or more and 52 vol% or less. In case of adjusting the porosity of the polymer substrate in the above range, the migration of ion can be sustained in the separator and the resistance of the separator can be prevented to increase. Specifically, when the porosity is 70 vol% or less, mechanical properties capable of withstanding the press process of bonding to the electrode may be secured, and the surface aperture ratio is not too high, which is suitable for securing adhesion. However, when the porosity is 30 vol% or more, it is advantageous in terms of ion permeability.

The porosity refers to the ratio of the volume occupied by the pores to the total volume, vol% is used as its unit and can be used interchangeably with terms such as space porosity and multi-porosity. According to the present disclosure, the porosity and pore size of the porous polymer substrate may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.). Herein, it may be advantageous to use a capillary flow porosimeter.

A porous coating layer may be formed by coating and drying a slurry for forming an organic/inorganic composite porous coating layer on the polymer substrate. Before application of the slurry, plasma treatment may be performed or surface treatment such as corona discharge may be performed in order to improve the impregnation property to the electrolyte.

In addition, the porous coating layer includes inorganic particles for improving mechanical properties and insulation of the porous polymer substrate and a binder resin for improving adhesion between the electrode and the polymer substrate. The binder resin provides an adhesive strength between the electrode and the polymer substrate, simultaneously binds adjacent inorganic particles, and maintains the bonding. The thickness of the porous coating layer may be 0.1 µm to 5 um.

The binder resin, according to the present disclosure, may include particulate binder resins, and these particulate binder resins may be a mixture of acrylic-based polymer binder particles and vinylidene fluoride-based polymer binder particles.

In this case, the acrylic-based polymer binder particle is a polymer including a carboxylic acid ester as a repeating unit, and specifically, may be a (meth)acrylic acid ester. Specific examples of such (meth)acrylic acid ester may include, for example, (meth)methyl acrylate, (meth)ethyl acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-Octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, ethylene di(meth)acrylate, and the like, and may be at least one selected among them. Among them, at least one selected from methyl (meth)acrylate, ethyl (meth)acrylate, and 2-ethylhexyl (meth)acrylate is preferable.

The acrylic-based polymer binder particles may have a glass transition temperature (Tg) of 60°C or less, specifically, 50°C or less, and more specifically, 40°C or less. When the glass transition temperature (Tg) of the acrylic-based polymer binder particles is 60°C or less, it may advantageously act to improve the adhesive strength of the porous coating layer.

In addition, the vinylidene fluoride-based polymer binder particles are insoluble in the electrolyte, and may be a homopolymer of vinylidene fluoride, a copolymer of vinylidene fluoride and other polymerizable monomers, or a mixture of two or more thereof.

Polymerizable monomers other than vinylidene fluoride may include at least one selected from the group consisting of tetrafluoroethylene, hexafluoropropylene, trifluoroethylene, chlorofluoroethylene, 1,2- difluoroethylene, perfluoro(methylvinyl)ether, perfluoro(ethylvinyl)ether, perfluoro(propylvinyl)ether, perfluoro(1,3 dioxole), perfluoro (2,2-dimethyl-1,3-dioxole), trichloroethylene, and vinyl fluoride but are not limited thereto. In particular, the vinylidene fluoride-based polymer binder particles may be a copolymer of vinylidene fluoride and hexafluoropropylene. The content of vinylidene fluoride and other polymerizable monomers may be 1 to 20% by weight of the copolymer but is not limited thereto.

In the present disclosure, the content of the comonomer in the vinylidene fluoride-based polymer binder particles may be measured by 1H-NMR method using Varian 500 MHz. For detailed measurement methods, refer to Journal of Materials Chemistry, 2012, 22, 341 or AMT-3412-0k. For the confirmation of the NMR spectrum, suitable equipment such as Bruker Avance III HD 700 MHz NMR or Varian 500 MHz NMR may be used.

In this case, the weight ratio of the acrylic-based polymer binder particles to the vinylidene fluoride-based polymer binder particles may be 7:3 to 3:7. When the content of the acrylic-based polymer binder particles is greater than the above range or the content of the vinylidene fluoride-based polymer binder particles is less than the above range, it is not preferable because wet state adhesive strength is not formed, and when the content of the acrylic-based polymer binder particles is less than the range or the content of the vinylidene fluoride-based polymer binder particles is greater than the range, it may be difficult to form a dry state adhesive strength, which is not preferable. Specifically, since the acrylic-based polymer binder particles have a high solubility in an electrolyte, they are held on the upper portion of the porous coating layer before being impregnated with the electrolyte. The acrylic-based polymer binder particles maintained in this procedure can maintain dry adhesive force in the process of laminating the electrode and the separator to prevent the separator from being folded. When the separator is impregnated with the electrolyte, the acrylic-based polymer binder particles are dissolved in the electrolyte, and the vinylidene fluoride-based polymer binder particles having a low solubility in the electrolyte are held on the porous coating layer. The vinylidene fluoride-based polymer binder particles maintained in this way maintain wet adhesive force even if impregnated with the electrolyte, preventing lithium dendrites from being precipitated as the electrolyte impregnation into the separator is hindered.

In addition, the acrylic-based polymer binder particles may be first copolymer binder particles, including styrene and acrylate, in a weight ratio of 5:5 to 7:3. Specifically, the acrylic-based polymer binder particles may be first copolymer binder particles, including styrene repeat unit and acrylate repeat unit, in a weight ratio of 5:5 to 7:3. At this time, when the content of styrene is greater than the above range or the content of acrylate is less than the above range, the glass transition temperature (Tg) is increased, and thus it may be difficult to form dry state adhesive strength under a lamination process (50°C to 80°C) condition, which is not preferable, and when the styrene content is less than the above range or the acrylate content is larger than the above range, it may be difficult to form dry state adhesive strength due to the glass transition temperature (Tg) is lowered and thus the binder layer structure collapses at room temperature, which is not preferable.

In the present specification, the glass transition temperature may be measured using a differential scanning calorimeter (DSC). Specifically, the glass transition temperature may be measured at a temperature increasing rate (-50°C to 250°C) of 10°C/min using a differential scanning calorimeter. For example, the glass transition temperature may be measured using DSC 250 (TA).

In this case, the average particle diameter (D50) of the first copolymer binder particles may be in a range of 350 to 700 nm, specifically 350 to 500 nm. At this time, when the average particle diameter of the first copolymer binder particles is smaller than the numerical range, the first copolymer binder particle is soaked between the inorganic particles, which is not preferable because it is difficult to form a binder layer structure, and when the average particle diameter of the first copolymer binder particles exceeds the numerical range, it is difficult to fix and formation of a porous coating layer, and there is a problem in forming a uniform surface, which is not preferable.

Furthermore, the vinylidene fluoride-based polymer binder particles may be a second copolymer binder particle in which vinylidene fluoride-based polymer particles with 10% by weight or less of hexafluoropropylene (HFP) and acrylate are crosslinked in a weight ratio of 5:5 to 9:1. At this time, when the content of the vinylidene fluoride-based polymer particles is greater than the above range or the content of the acrylate is less than the above range, it is not preferable because to form a wet state adhesive strength is difficult, and when the content of the vinylidene fluoride-based polymer particles is smaller than the above range or the content of the acrylate is larger than the above range, it is not preferable because to prepare a slurry for forming a porous coating layer may be difficult.

In this case, the average particle diameter (D50) of the second copolymer binder particle may be in a range of 150 to 250 nm, specifically 150 to 200 nm. At this time, when the average particle diameter of the second copolymer binder particle is smaller than the numerical range, the second copolymer binder particle is soaked between the inorganic particles, which is not preferable because it is difficult to form a binder layer structure, and when the average particle diameter of the second copolymer binder particles exceeds the numerical range, the porous coating layer may be unevenly formed, which is not preferable.

In particular, when both the first copolymer binder particles and the second copolymer binder particles have the average particle diameter, it is preferable because the adhesive strength in a dry state and a wet state may be uniformly formed in the cathode and the anode.

In the present specification, the "D50 particle diameter" means the particle diameter at 50% point of the cumulative distribution of the number of particles according to the particle diameter. The particle diameter may be measured using a laser diffraction method. Specifically, after the powder to be measured is dispersed in a dispersion medium, it is introduced into a commercially available laser diffraction particle size measuring device (for example, Microtrac S3500) to calculate the particle size distribution by measuring the difference in diffraction patterns according to the particle size when the particles pass through the laser beam. By calculating the particle diameter at the point where the number of particles becomes 50% of the cumulative distribution according to the particle diameter in the measuring device, the particle diameter D50 may be measured.

Meanwhile, the particulate binder resins included in the porous coating layer further include a third copolymer polymer particle, including methyl (meth)acrylate and 2-ethylhexyl (meth)acrylate in a weight ratio of 2:8 to 5:5. Specifically, the particulate binder resins included in the porous coating layer further include a third copolymer polymer particle, crosslinking methyl (meth)acrylate and 2-ethylhexyl (meth)acrylate in a weight ratio of 2:8 to 5:5. More specifically, the particulate binder resins included in the porous coating layer further include a third copolymer polymer particle, including methyl (meth)acrylate repeat unit and 2-ethylhexyl (meth)acrylate repeat unit in a weight ratio of 2:8 to 5:5. At this time, when the content of the methyl (meth)acrylate is greater than the above range or the content of 2-ethylhexyl (meth)acrylate is less than the above range, the glass transition temperature (Tg) is increased and the peel strength can be lowered, which is not preferable, and when the content of methyl (meth)acrylate is less than the above range or the content of 2-ethylhexyl (meth)acrylate is greater than the above range, the particle shape of the binder is broken, there is a risk against the soaking phenomenon of a polymer substrate, that is, a fabric, which is not preferable.

Here, the particulate binder resins may include 4% to 95% by weight of the acrylic-based polymer binder particles, 4% to 95% by weight of the vinylidene fluoride-based polymer binder particles, and 1% to 10% by weight of the third copolymer polymer particles based on the total content of the particulate binder resins, and when the components are out of this content range, the resistance of the separator may increase, and a side effect of making it difficult to form an adhesive strength may occur.

The inorganic particles included in the porous coating layer, according to the present disclosure, are not particularly limited as long as the thickness of the porous coating layer is uniformly formed and oxidation and/or reduction reactions do not occur in the operating voltage range of the applied electrochemical device. In one embodiment, the uniformity of the thickness may have a tolerance of +/- 2 um. In particular, when inorganic particles having an ion transport ability are used, the performance can be improved by increasing the ion conductivity in the electrochemical device. In addition, when inorganic particles having a high dielectric constant are used as the inorganic particles, the ionic conductivity of the electrolyte may be improved by contributing to an increase in the degree of dissociation of an electrolyte salt, such as a lithium salt, in a liquid electrolyte.

As an example of the inorganic particles, an inorganic material having at least one characteristic of lithium ion transfer ability, piezoelectricity, and flame retardancy may be mentioned.

The inorganic particles with excellent lithium ion transfer capability refer to inorganic particles with a function of moving lithium ions without storing lithium while containing a lithium element. The inorganic particles having a lithium ion transfer capability may transfer and move lithium ions due to some kind of defect present in the particle structure. Accordingly, the lithium ion conductivity in the battery is improved, thereby improving the battery performance.

Examples of the inorganic particles having the lithium ion transport ability may include at least one selected from the group consisting of lithium phosphate, lithium titanium phosphate, lithium aluminum titanium phosphate, (LiAlTiP)ₓO_{y} series glass, lithium lanthanum titanate, lithium germanium thiophosphate, lithium nitride such as Li₃N (LiₓN_{y}, 0<x<4, 0<y<2), SiS₂-based glass such as Li₃PO₄-Li₂S-SiS₂ (LiₓSi_{y}S_{z}, 0<x<3, 0<y<2, 0<z<4), P₂S₃-based glass such as LiI-Li₂S-P₂S₅ (LiₓP_{y}S_{z}, 0<x<3, 0<y<3, 0<z<7), LLZO series, or a mixture thereof but is not limited thereto.

The inorganic particles having piezoelectricity refers to a material that is nonconductive at atmospheric pressure but has physical properties in which electricity is applied due to a change in internal structure when a predetermined pressure is applied and is a material having a function that not only exhibits high dielectric constant characteristics with a dielectric constant of 100 or more, but also generates an electric charge when it is stretched or compressed by applying a certain pressure, so that one side is positively charged and the other side is negatively charged, thereby generating a potential difference between both sides.

In the case of using inorganic particles having the above characteristics, when an internal short circuit between the cathode and the anode occurs due to external impacts such as local crush or nail, not only the cathode and the anode do not directly contact due to the inorganic particles coated on the separator, but also a potential difference is generated within the particles due to the piezoelectricity of the inorganic particles, which results in electron movement between the cathode and the anode, that is, the flow of a minute current, thereby reducing the voltage of the battery gently and improving the safety thereof.

Examples of the inorganic particles having piezoelectricity may include BaTiO₃, Pb(Zr,Ti)O₃ (PZT), Pb₁₋ₓLaₓZr_{1-y}Ti_{y}O₃ (PLZT) (0<x<1, 0<y<1), Pb (Mg_{1/3}Nb_{2/3})O₃-PbTiO₃ (PMN-PT), hafnia (HfO₂), or a mixture thereof but is not limited thereto.

The inorganic particles having flame retardancy not only prevent overcharging of the electrochemical device but also add flame retardant properties to the separator or prevent the temperature inside the battery from rapidly increasing. The inorganic particles having flame retardancy may be at least one selected from the group consisting of an antimony-containing compound, a metal hydroxide or metal hydrate, a guanidine-based compound, a boron-containing compound, and a zinc stannate compound.

Specifically, the antimony-containing compound may be selected from antimony trioxide (Sb₂O₃), antimony tetraoxide (Sb₂O₄), and antimony pentoxide (Sb₂O₅); the metal hydroxide or metal hydrate may be selected from alumina (Al₂PO₃), magnesium hydroxide, aluminum hydroxide (Al(OH)₃), aluminum oxyhydroxide (AlO(OH)), and CaOAl₂O₃6H₂O; the guanidine-based compound may be selected from the group consisting of nitrogenated guanidine, guanidine sulfamate, guanidine phosphate, and guanyl urea phosphate; the boron-containing compound may be selected from H₃BO₃ or HBO₂; and the zinc stannate compound may be selected from Zn₂SnO₄, ZnSnO₃, and ZnSn(OH)₆.

The average particle diameter (D50) of the inorganic particle may be in a range of 50 to 5000 nm, preferably 200 nm to 1000 nm, more preferably 300 to 700 nm. When the average particle diameter of the inorganic particles is less than 50 nm, as the specific surface area increases, a binder resin for bonding between the inorganic particles is additionally required, which is disadvantageous in terms of electrical resistance. Also, the greater the amount of the binder resin present, the lower the peel strength or the binder peeling off. When the average particle diameter of the inorganic particles exceeds 5000 nm, the uniformity of the coating layer surface becomes low. In addition, when the size of the protruding particles after the coating is large, a short circuit may occur because the separator and the electrode are damaged in the lamination process.

The aspect ratio of the inorganic particles may be 1 to 2, preferably 1.2 to 2, and the BET specific surface area of the inorganic particles may be 5 m²/g to 25 m²/g. The binder resin may be easily moved through the pores between the inorganic particles formed within the above range, and particularly, as the aspect ratio is small and the BET specific surface area is small as monodisperse, the binder resin may be moved in the coating layer.

In the present specification, BET may be calculated using a Brunauer-Ennett-Teller model (BET) from the measured N2 adsorption isotherm when the adsorption isotherm is measured up to 1 bar at -196°C using a BET-specific surface area analyzer (BEL, Microtrac).

In addition, the porous coating layer may further include a dispersing agent to further improve the dispersibility of the inorganic particles. The dispersing agent functions to maintain a uniformly dispersed state of inorganic particles in the binder resin when the slurry for forming the porous coating layer is prepared. Examples of the material that can be used as the dispersing agent may include any one or more selected from among oil-soluble polyamines, oil-soluble amine compounds, fatty acids, fatty alcohols, sorbitan fatty acid esters, tannic acid, and pyrogallic acid. When a dispersing agent is included, the porous coating layer may include 5% by weight or less of the dispersing agent.

On the other hand, in the electrochemical device separator, according to the present disclosure, the adhesive strength of the separator in the state impregnated in the electrolyte, that is, in the wet state, may be 1.0 gf/25 mm or more, and specifically, 10 gf/25 mm or more, more specifically, 15 gf/25 mm to 20 gf/25 mm. When the wet state adhesive strength is less than 1.0 gf/25 mm, the stiffness of the cell is lowered, which may cause assembly problems or folding problems of the separator when manufacturing the electrode assembly, and when the adhesive strength in the wet state exceeds 20 gf/25 mm, impregnating the separator with an electrolyte is disturbed, and thus lithium dendrite may be deposited.

In the present specification, the wet adhesive force may be measured by cutting a cathode coated with an NCM-based cathode mixture on an aluminum foil and the separator to have a width of 25 mm and putting them in a pouch, injecting a carbonate-based electrolyte, and pressing the pouch under conditions of 5 kgf, 70°C, and 4 minutes to prepare a sample for measuring electrode adhesive force, and conducting a 90° peel test at 200 mm/min using a UTM equipment from Instron.

In addition, in the electrochemical device separator, before being impregnated with an electrolyte, that is, in a dry state, the adhesive strength of the separator may be 10 gf/25 mm or more, specifically, 10 gf/25 mm to less than 100 gf/25 mm, and more specifically, 30 gf/25 mm to less than 100 gf/25 mm. When the dry state adhesive strength is greater than 100 gf/25 mm, wetting a separator with an electrolyte is disturbed, and thus lithium dendrite may be deposited.

In the present specification, the dry adhesive force may be measured by cutting the anode coated with the carbon-based anode mixture on a copper foil and the separator so as to have a width of 25 mm and overlapping the same, pressing the same under the conditions of 60°C, 6.5 MPa, and 1 second using a Hot press equipment to prepare a sample for measuring electrode adhesive force, and then conducting a 180° peel test under the conditions of 300 mm/min using Instron's UTM equipment.

On the other hand, the electrochemical device, according to another aspect of the present disclosure, includes a cathode, an anode, and a separator interposed between the cathode and the anode, in which the separator is the separator according to the present disclosure as described above.

In the present disclosure, the cathode includes a cathode current collector and a cathode active material layer including a cathode active material, a conductive material, and a polymer binder on at least one surface of the current collector. The cathode active material may include one or a mixture of two or more among layered compounds such as lithium manganese oxide (LiMn₂O₄, LiMnO₂, etc.), lithium cobalt oxide (LiCoO₂), lithium nickel oxide (LiNiO₂), or a compound substituted with one or more transition metals; lithium manganese oxides of the formula Li₁₊ₓMn₂₋ₓO₄ (where x is 0 to 0.33), LiMnO₂, LiMn₂O₂, LiMnO₂, and the like; lithium copper oxide (Li₂CuO₂); vanadium oxides such as LiV₃O₈, LiV₃O₄, V₂O₅, and Cu₂V₂O₇; Ni site-type lithium nickel oxide represented by the formula LiNi₁₋ₓMₓO₂ (where M = Co, Mn, Al, Cu, Fe, Mg, B, or Ga, and x = 0.01 to 0.3); lithium manganese composite oxides represented by the formula LiMn₁₋ₓMₓO₂ (where M = Co, Ni, Fe, Cr, Zn, or Ta and x = 0.01 to 0.1) or Li₂Mn₃MO₈ (where M = Fe, Co, Ni, Cu, or Zn); LiMn₂O₄ in which a part of lithium in the formula is substituted with an alkaline earth metal ion; disulfide compounds; and Fe₂(MoO₄)₃.

In the present disclosure, the anode includes an anode current collector and an anode active material layer, including an anode active material, a conductive material, and a polymer binder on at least one surface of the current collector. The anode may include at least one component or a mixture of two or more as an anode active material selected from the group consisting of lithium metal oxide, carbons such as non-graphitized carbon, and graphite-based carbon; LiₓFe₂O₃(0≤x≤1), LiₓWO₂(0≤x≤1), silicon-based material such as Si, SiOₓ (0<x<2), SiC, and Si alloy; metal composite oxides such as SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloy; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxides.

In the present disclosure, the current collector is not particularly limited as long as the current collector has high conductivity without causing a chemical change in the electrochemical device, for example, stainless-steel, copper, aluminum, nickel, titanium, sintered carbon, or aluminum or stainless-steel surface treated with carbon, nickel, titanium, silver, etc., may be used.

In the present disclosure, the conductive material may include any one selected from the group consisting of graphite, carbon black, carbon fiber, or metal fiber, metal powder, conductive whisker, conductive metal oxide, carbon nanotube, activated carbon, and polyphenylene derivatives, or a mixture of two or more conductive materials. The carbon nanotubes have a graphite sheet in the shape of a cylinder having a nano-sized diameter and a sp² binding structure and exhibit characteristics of a conductor or a semiconductor according to an angle and a structure at which the graphite sheet is rolled. Carbon nanotubes may be appropriately classified as single-walled carbon nanotube (SWCNT), double-walled carbon nanotube (DWCNT), and multi-walled carbon nanotube (MWCNT) depending on the number of bonds forming the wall, and these carbon nanotubes may be appropriately selected according to the use of the dispersion. More specifically, the conductive material may be one selected from the group consisting of natural graphite, artificial graphite, super-p, acetylene black, Ketjen black, channel black, furnace black, lamp black, summer black, Denka black, aluminum powder, nickel powder, zinc oxide, potassium titanate, and titanium oxide, or a mixture of two or more of these conductive materials.

In the present disclosure, as the polymer binder, a polymer binder commonly used for electrodes in the art may be used. Non-limiting examples of such polymer binders include polyvinylidene fluoride-co-hexafluoropropylene, polyvinylidene fluoride-co-trichloroethylene, polymethylmethacrylate, polyethylhexyl acrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose and the like, but are not limited thereto.

The electrode assembly, according to the present disclosure, includes a cathode, an anode, and a separator interposed between the cathode and the anode. An electrochemical device can be manufactured by loading the electrode assembly into an appropriate case and injecting an electrolyte.

In the present disclosure, the electrolyte solution is a salt having the same structure as A⁺B⁻, and A⁺ includes ions formed of alkali metal cations such as Li⁺, Na⁺, K⁺, or a combination thereof, or B⁻ includes PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, or a combination thereof. In the electrolyte, the salt may be dissolved or dissociated in an organic solvent or an organic solvent consisting of a mixture thereof including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), and gamma butyrolactone (γ-butyrolactone) but is not limited thereto.

Further, in the present disclosure, provided is a battery module including a battery including the electrode assembly as a unit cell, a battery pack including the battery module, and a device including the battery pack as a power source. Specific examples of the device include a power tool powered by a battery motor; electric vehicles including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooter); electric golf carts; and a power storage system, but is not limited thereto.

Mode for carrying out the inventionHereinafter, examples will be given to describe the present disclosure in detail. However, the embodiments, according to the present disclosure, may be modified in various other forms, and the scope of the present disclosure should not be construed as being limited to the embodiments described below. The embodiments of the present disclosure are provided to more completely explain the present disclosure to those of ordinary skilled in the art.

### <Example 1>

10 parts by weight of acrylic-based polymer binder particles [LGC, AD-S11, D50: 400 nm, copolymer of styrene and butyl acrylate (Tg 40°C)] , 10 parts by weight of vinylidene fluoride-based polymer binder particles [Arkema, LBG4330LX, D50: 200 nm, a copolymer that a copolymer in which VDF and HFP are polymerized in a weight ratio of 95:5 and a copolymer of ethyl acrylate and methyl methacrylate (Tg 20°C) are crosslinked in a weight ratio of 7:3], and 80 parts by weight of inorganic particles (Al₂O₃, D50: 500 nm, Sumitomo, AES11) were added to water and dispersed to prepare a slurry for forming a porous coating layer.

Next, prepare a polyethylene porous polymer substrate (porosity 40%, thickness 9 pm), coat the slurry on both sides on the surface of the polymer substrate by bar coating using a doctor blade, and dry the slurry at 50°C using a heat gun to form a porous coating layer having a thickness of 12 um with respect to the thickness of one side.

### <Example 2>

A porous coating layer was formed in the same manner as in Example 1, except that 14 parts by weight of the acrylic-based polymer binder particles and 6 parts by weight of the vinylidene fluoride-based polymer binder particles were changed to prepare a slurry for forming the porous coating layer.

### <Example 3>

A porous coating layer was formed in the same manner as in Example 1, except that 8 parts by weight of acrylic-based polymer binder particles, 8 parts by weight of vinylidene fluoride-based polymer binder particles, and 4 parts by weight of polymer binder particles containing methyl (meth)acrylate and 2-ethylhexyl (meth)acrylate in a weight ratio of 5:5 were changed to prepare a slurry for forming the porous coating layer.

### <Comparative Example 1>

A porous coating layer was formed in the same manner as in Example 1, except that 0 parts by weight of the acrylic-based polymer binder particles and 20 parts by weight of the vinylidene fluoride-based polymer binder particles were changed to prepare a slurry for forming the porous coating layer.

### <Comparative Example 2>

A porous coating layer was formed in the same manner as in Example 1, except that 20 parts by weight of the acrylic-based polymer binder particles and 0 parts by weight of the vinylidene fluoride-based polymer binder particles were changed to prepare a slurry for forming the porous coating layer.

### <Experimental Example 1> Binder distribution analysis

After SEM measurement of the cross-section of the porous coating layer of the separator prepared in Examples and Comparative Examples, mapping analysis is performed through EDX. More specifically, after the separator is dyed with RuO₄, a cross-sectional sample is prepared by ion milling, then SEM is measured in BSE mode, and mapping analysis is performed using EDX. After dividing the cross section of the porous coating layer into an upper portion, a central portion, and a lower part, by calculating the area through integration, the binder distribution result according to the part of the cross section of the porous coating layer can be confirmed. Table 1 below numerically shows the binder distribution results according to the cross-sectional parts of the porous coating layers of Examples and Comparative Examples.

**[Table 1]**

| | Content of binder particles on the upper portion of the porous coating layer / Content of binder particles in the central portion of the porous coating layer | | |
|---|---|---|---|
| | Before impregnation with electrolyte (a) | After impregnation with electrolyte (b) | a-b |
| Example 1 | 1.3 | 1.27 | 0.03 |
| Example 2 | 1.25 | 1.04 | 0.21 |
| Example 3 | 1.29 | 1.25 | 0.04 |
| Comparative Example 1 | 1.05 | 0.69 | 0.36 |
| Comparative Example 2 | 1.04 | 0.71 | 0.33 |

FIGS. 1(A) and 1(B) are views showing the distribution of the binder according to the thickness of the porous coating layer of the separator according to Example 1 and FIGS. 2(A) and 2(B) are views showing the distribution of the binder according to the thickness of the porous coating layer of the separator according to Comparative Example 1.

Referring to FIGS. 1 and 2, in the case of Example 1, even when comparing before and after impregnation with the electrolyte, it can be seen that the content of the binder in the upper portion of the porous coating layer is maintained higher than the central portion of the porous coating layer. In the case of Comparative Example 1, the binder content in the upper portion of the porous coating layer was higher than in the central portion before the impregnation with electrolyte, but it can be seen that the binder content in the central portion of the porous coating layer is higher than the upper portion of the porous coating layer after the impregnation with electrolyte. Accordingly, in Comparative Example 1, the adhesive strength between the porous coating layer and the electrode after the impregnation with electrolyte will be reduced, but in the case of Example 1, it is expected that the adhesive strength between the porous coating layer and the electrode will be sufficiently maintained even after the impregnation with electrolyte.

### <Experimental Example 2> Dry adhesive strength measurement

The anode coated with the carbon-based anode mixture on a copper foil and the separator produced in the Example and Comparative Example were cut to have a width of 25 mm and disposed to be overlapped, respectively.

This was pressurized under conditions of 60°C, 6.5 MPa, and 1 second using a hot press device to prepare a sample for measuring electrode adhesion.

In order to measure the adhesive strength between the anode and the separator, a 180° peel test was performed at 300 mm/min condition using Instron's UTM equipment.

The dry adhesive strength measured as described above is shown in Table 2 below.

### <Experimental Example 3> Wet adhesive strength measurement

The cathode coated with the NCM-based cathode mixture on an aluminum foil and the separator produced in the Example and Comparative Example are cut to have a width of 25 mm, placed in a pouch, and carbonate-based electrolyte was injected.

The pouch was pressurized under conditions of 5 kgf, 70°C, and 4 minutes to prepare a sample for measuring electrode adhesion.

In order to measure the adhesive strength between the cathode and the separator, a 90° peel test was performed at 200 mm/min condition using Instron's UTM equipment.

The wet adhesive strength measured as described above is shown in Table 2 below.

**[Table 2]**

| | Example 1 | Example 2 | Example 3 | Comparative Example 1 | Comparative Example 2 |
|---|---|---|---|---|---|
| Dry adhesive strength (gf/25 mm) | 41 | 37 | 39 | 15 | 14 |
| Wet adhesive strength (gf/25 mm) | 17 | 15 | 17 | 0 | 0 |

Referring to Table 2, in the case of Examples, the dry adhesive strength was measured to be about 40 gf/25 mm, and the wet adhesive strength was measured to be about 15 to 17 gf/25 mm, so it can be confirmed that an adequate and excellent adhesive strength at both dry and wet states was formed. However, in the case of Comparative Examples, it can be seen that dry adhesive strength was formed to some extent, but wet adhesive strength was completely lost.

The present specification discloses a preferred embodiment of the present disclosure, and although specific terms are used, they are used in a general sense to easily explain the technical contents of the present disclosure and help understanding of the present disclosure, not to limit the scope of the present disclosure. In addition to the embodiments disclosed herein, it is obvious to those skilled in the art that other modified examples based on the technical idea of the present disclosure may be implemented. For example, those of ordinary skilled in the art will know that the electrochemical device separator according to the embodiment and the electrochemical device including the same can be variously modified. Accordingly, the scope of the disclosure should not be defined by the described embodiments, but should be defined by the technical idea described in the claims.

## Claims

1. A separator for an electrochemical device, the separator comprising a porous polymer substrate and an organic/inorganic composite porous coating layer formed on at least one surface of the polymer substrate,
wherein the porous coating layer comprises a particulate binder resin and inorganic particles, and satisfies a condition in which
[content of binder particles in an upper portion of a porous coating layer before impregnation with electrolyte/content of binder particles in a central portion of a porous coating layer before impregnation with electrolyte] - [content of binder particles in an upper portion of a porous coating layer after impregnation with electrolyte/content of binder particles in a central portion of a porous coating layer after impregnation with electrolyte] is 0.32 or less.

2. The separator of claim 1, wherein the particulate binder resin is a mixture of acrylic-based polymer binder particles and vinylidene fluoride-based polymer binder particles.

3. The separator of claim 2, wherein the acrylic-based polymer binder particles to the vinylidene fluoride-based polymer binder particles have a weight ratio of 7:3 to 3:7.

4. The separator of claim 2, wherein the acrylic-based polymer binder particle is a first copolymer binder particle comprising styrene and acrylate in a weight ratio of 5:5 to 7:3.

5. The separator of claim 4, wherein the first copolymer binder particle has an average particle diameter in a range of 350 to 700 nm.

6. The separator of claim 2, wherein the vinylidene fluoride-based polymer binder particle is a second copolymer binder particle in which vinylidene fluoride-based polymer particles with 10% by weight or less of hexafluoropropylene and acrylate are crosslinked in a weight ratio of 5:5 to 9:1.

7. The separator of claim 6, wherein the second copolymer binder particle has an average particle diameter in a range of 150 to 250 nm.

8. The separator of claim 2, wherein the particulate binder resin further comprises a third copolymer polymer particle comprising methyl (meth)acrylate and 2-ethylhexyl (meth)acrylate in a weight ratio of 2:8 to 5:5.

9. The separator of claim 8, wherein in the particulate binder resin, the acrylic-based polymer binder particles are 4% to 95% by weight, the vinylidene fluoride-based polymer binder particles are 4% to 95% by weight, and the third copolymer polymer particles are 1% to 10% by weight with respect to the total content of the particulate binder resin.

10. An electrochemical device comprising a cathode, an anode, and a separator interposed between the cathode and the anode, wherein the separator is the separator according to any one of claims 1 to 9.
